# EUROPEAN PATENT SPECIFICATION

(11) **EP 2 435 384 B1**
(45) Date of publication and mention of the grant of the patent: **11.12.2019**
(21) Application number: 10717943.4
(22) Date of filing: 27.04.2010
(51) Int. Cl.: C04B 41/52, C04B 41/89, C03C 8/02

(54) **METHOD FOR APPLYING A CERAMIC GLAZE LAYER HAVING ANTIMICROBIAL PROPERTY**
VERFAHREN ZUM AUFBRINGEN EINER KERAMISCHEN GLASURSCHICHT MIT ANTIMIKROBIELLEN EIGENSCHAFTEN
PROCÉDÉ D'APPLICATION D'UNE COUCHE DE GLAÇURE CÉRAMIQUE AYANT DES PROPRIÉTÉS ANTIMICROBIENNES

(30) Priority: 27.04.2009 US 172805 P
(43) Date of publication of application: 04.04.2012
(73) Proprietor: MICROBAN PRODUCTS COMPANY, Huntersville, NC 28078 (US)
(72) Inventor: CAMPBELL, Alvin, Lamar, Jr., Huntersville, NC 28078 (US)
(74) Representative: Boult Wade Tennant LLP
(86) International application number: PCT/US2010/032638
(87) International publication number: WO 2010/126917

(56) References cited:
- US-A1- 2009 104 459
- US-B1- 6 514 622
- DATABASE WPI Week 199911 Thomson Scientific, London, GB; AN 1999-125398 XP002588145 & JP 11 001380 A (INAX KK) 6 January 1999 (1999-01-06)

## Description

### FIELD OF THE INVENTION

The present invention relates to the field of antimicrobial protection in a ceramic article or component thereof. More specifically, the present invention relates to a method for imparting built-in and long lasting antimicrobial characteristics to ceramic products.

### BACKGROUND OF THE INVENTION

Ceramic articles and ceramic coatings are an area of particular commercial interest. Ceramic coatings are commonly used in products that store, treat, or transport water and liquid waste. Ceramic toilets, urinals, bidets, bathroom basins (collectively known as sanitary ware), as well as tiles for use in flooring, wall and countertop applications, are probably the most common example of such products.

When used to collect, contain and/or transport water, ceramic products often become stained by scum and films of biologic origin (e.g., bacteria, fungus, mold, mildew). In other applications such as sanitary ware and tiles, the primary conventional methods of removing biological scum and film from these ceramic products has been topical application of a disinfectant and/or abrading composition.

There is a commercial opportunity for a ceramic coating that offers durable, built-in protection against the growth and proliferation of microbes. However, existing technologies are somewhat limiting in the development of this property. For example, the high temperatures used in ceramic firing processes typically preclude the use of organic antimicrobial agents.

US 6,514,622 relates to sanitary ware which permits stains or soils deposited on the surface thereof to be simply removed, for example, by running water. US 2009/0104459 relates to an antimicrobial ceramic glazing composition containing one or more antimicrobial agents disposed therein. JP 11001380 to forming an antimicrobial agent layer under the glaze layer of a top surface on the surface of a ceramic base material and firing the ceramic product.

### DETAILED DESCRIPTION

As used herein, the terms "microbe" or "microbial" should be interpreted to refer to any of the microscopic organisms studied by microbiologists or found in the use environment of a ceramic article. Such organisms include, but are not limited to, bacteria and fungi as well as other single-celled organisms such as mold, mildew and algae. Viral particles and other infectious agents are also included in the term microbe.

"Antimicrobial" further should be understood to encompass both microbicidal and microbistatic properties. That is, the term comprehends microbe killing, leading to a reduction in number of microbes, as well as a retarding effect of microbial growth, wherein numbers may remain more or less constant (but nonetheless allowing for slight increase/decrease).

For ease of discussion, this description uses the term antimicrobial to denote a broad spectrum activity (e.g. against bacteria and fungi). When speaking of efficacy against a particular microorganism or taxonomic rank, the more focused term alternatively may be used (e.g. antifungal to denote efficacy against fungal growth in particular).

Using the above example, it should be understood that efficacy against fungi does not in any way preclude the possibility that the same antimicrobial composition may demonstrate efficacy against another class of microbes.

For example, discussion of the strong antibacterial efficacy demonstrated by a disclosed embodiment should not be read to exclude that embodiment from also demonstrating antifungal activity. This method of presentation should not be interpreted as limiting the scope of the invention in any way.

Irrespective of color, process or product type, and fired surface texture, glazes typically are described as raw or fritted. Raw glazes conventionally are combinations of natural and synthetic materials (e.g. feldspars, clays, quartz, carbonates and oxides) of suitable composition to produce the desired final glaze. Fritted glazes comprise pre-melted glass or frit. They are usually selected when firing or compositional parameters are incompatible with raw glazes.

A glaze material typically is applied as a water-based suspension by spraying or dipping methods. In less common cases, dry or electrostatic applications methods are used. This disclosure focuses on the application of a dry glaze composition.

Glazes are applied to a broad variety of substrates including without limitation tableware, sanitary ware, tile, electrical porcelain, and engineering ceramics.

Conventional glazes are fired between about 950 °C and as high as about 1430°C, with firing temperatures chosen depending on the particular application. In most cases, oxidizing conditions are used; for certain products, however, reducing conditions can be required.

The following illustrative discussion of ceramic glazing compositions and in particular to the present dry application adhesive composition and method is provided as an aid to the reader. This discussion is presented in the context of a tile glazing application. Those skilled in the art recognize that the production and use of antimicrobial ceramic dry glazing compositions may vary from the examples presented below. The dry glazing composition and method disclosed herein are adaptable to such variances.

### ANTIMICROBIAL ADHESIVE COMPOSITION

An adhesive composition is disclosed for use in a dry application ceramic glazing process. The adhesive composition comprises one or more compounds that confer an antimicrobial property to the fired glaze and may further include conventional fillers and colorants.

For an adhesive composition useful in a dry-application ceramic glazing method, the antimicrobial formulation-which includes the antimicrobial compounds-is added to a conventional dry-application adhesive composition. Although water-based adhesive compositions are more commonly employed industrially, the adhesive composition can be either water- or organic-based.

The composition is sufficiently mixed, e.g. by agitation, such that the formulation can be maintained in a substantially homogeneous and uniform suspension.

The ratio of the adhesive and the antimicrobial formulation should be maintained within a desired range to ensure that there is a proper amount of antimicrobial agents present to provide efficacy on a finished surface. The desired range can vary, depending on the antimicrobial agent(s) selected and the particular adhesive composition employed. Exemplary adhesive formulations and formulating considerations are given below.

Water-soluble glue compositions typically comprise about 5 percent by weight (% w/w) of adhesive in water and generally up to about 7.5% w/w antimicrobial agent(s). The compositions further include suspending materials, e.g. kaolin, bentonite, surfactants, deflocculants, as well as other surface-changing components.

### ANTIMICROBIAL DRY-APPLICATION GLAZING PROCESS

The present invention relates to a method for manufacturing a glazed substrate as defined in claim 1 wherein a fired glaze layer thereon is to exhibit a persistent antimicrobial effect.

According to the invention, layers of adhesive are applied to a surface of a substrate, with an amount of a dry frit disposed in a layer therebetween. The substrate may be, for example, a porous ceramic, a ceramic with a granulated dry glaze applied, or a dried glazed surface.

In more detail, a first layer of an adhesive composition is applied, e.g. by spraying, to a surface of a body (e.g. a porous ceramic, a ceramic with a granulated dry glazing applied, a dried glazed surface, or the like).

Dry fritted glaze is then deposited on the applied first layer of adhesive to form a frit layer thereon. A variety of dry-process application frits or glaze compositions can be employed, depending on the desired aesthetics and intended use environment of the finished ceramic glaze.

The dry fritted glaze composition can be applied in a number of ways, such as for example pouring, shaking, spraying or blowing.

A second layer of an adhesive composition is applied over the dry fritted glaze and the first adhesive layer. Preferably, the second adhesive layer employs an adhesive composition including one or more antimicrobial agents, as described herein.

The substrate and layers then are fired in a conventional manner to mature the surface and produce a substrate having a glazed coating on the surface. As a result of the firing step, the first and second adhesive layers, the dry fritted glaze and the antimicrobial composition combine to form a fired glaze coating layer on the substrate. The antimicrobial materials reside on the glassy surface, where they demonstrate their antimicrobial properties.

The antimicrobial agent(s) should be compatible with the adhesive composition, its method of application to the substrate surface, the chemical components of the glaze composition to be applied thereon, and the firing parameters of the glazing process.

The second (most superficial) adhesive layer preferably is composed of the antimicrobial adhesive composition. It is additionally contemplated that either the second adhesive layer or both of the first and second adhesive layers can be made from the antimicrobial adhesive composition. While the first adhesive layer can be formed of an antimicrobial adhesive composition, it is more preferable that the antimicrobial agent be disposed more toward what will be the surface of the fired glaze coating layer.

The adhesive solution provides a method of disposing the antimicrobial agents proximate a ceramic surface prior to the final temperature treatment. This method substantially eliminates the need to mix the antimicrobial formulation into a traditional ceramic glazing formulation and thus circumvents the dilution of the active materials within this vehicle.

In a second embodiment of the method for manufacturing an antimicrobial glazed substrate, the antimicrobial agent is disposed in the dry-application fritted glaze, rather than in at least one of the adhesive compositions.

In this embodiment, the antimicrobial agent is admixed well with the dry glaze formulation, and this composition is applied as described above.

### ANTIMICROBIAL GLAZED SUBSTRATE

A substrate bearing a ceramic glaze is disclosed, wherein the surface of the glazed substrate exhibits a persistent antimicrobial property.

The ceramic glaze coated surface resulting from the above-disclosed method possesses antimicrobial materials at its glassy surface thereof, where the antimicrobial materials can exert their antimicrobial properties.

As well, disposal of the antimicrobial agent in a sprayable adhesive composition, rather than in a traditional ceramic slip, provides a more uniform distribution of agent within the fired glaze. This distribution decreases the incidence of "dead spots" wherein the antimicrobial agent concentration otherwise may be too low to effect a microbicidal and/or microbistatic property.

### EXAMPLE 1: PHYSICAL PROPERTIES

To assess both successful incorporation of antimicrobial agent into the glaze as well as the dosing levels resulting in antimicrobial efficacy, a series of experimental glazed substrate samples were produced and assayed.

The dry glaze used in the testing was a low fire base glaze, F-524 (Fusion Ceramics, Inc., Carrollton, Ohio). An antimicrobial dry glazing adhesive composition was produced by adding a desired amount of an antimicrobial agent to a water-soluble glue mixture (Americer STR, Americer, Venezuela) commonly used as a dry-application adhesive.

The glaze composition was applied to the tiles by spraying, and the tiles were then fired according to the methods set forth above.

Spray-coated negative control and experimental substrate tiles were placed into an electric kiln and fired to a Pyrometric Cone Equivalent 05. This measure of thermal history is roughly equivalent to 1889°F (i.e., about 1032°C).

The above procedure closely approximates a glaze application in a production environment. The final untreated glaze formulations (negative controls) resulted in samples having a glassy surface at a low temperature, highly resistant to absorption of dyes, and exhibiting no antimicrobial properties.

### EXAMPLE 2: ANTIMICROBIAL EFFICACY

It is expected that exposure of the glazed tile to microbes will result in microbial contact only with the glazed composition on the surface of the glazed tile. Thus, while a 10,000 ppm dose of antimicrobial agent may be applied in the form of the second adhesive layer, it is understood that some portion of this dose will reside below the surface, trapped within the glass of the glaze and thereby sequestered from microbes.

The measure of antimicrobial efficacy is the reduction in the number of organisms surviving the testing protocol in comparison with the baseline standard. Minimum efficacy is assumed to originate at a reduction level of 1 common logarithm (log (NOS Standard/NOS Sample)).

Testing is in accordance with a modified JIS Z2801:2000 test protocol (available from Japanese Industrial Standards Committee, Tokyo, Japan). The Z2801 protocol is an internationally known and accepted standard test for antimicrobial activity and efficacy. The protocol and specific modifications made thereto are briefly summarized below.

Square sample tile pieces having an edge dimension of approximately 32-51 mm were used. Ceramic glaze composition was applied and fired according to the instructions for the commercial glaze base employed. This preparation process yielded test disks having about a top surface area of about 1000-2580 square millimeters.

The comparison test for antimicrobial efficacy used *Klebsiella pneumoniae,* ATCC 4352. The test organism was grown, and a portion of an exponentially growing culture was collected into Japanese Nutrient Broth (JNB) diluted 1/500. An inoculum was prepared at about 10⁶ colony-forming units (CFU) per milliliter by dilution with 1/500 JNB.

A sample tile was placed on moistened laboratory tissue in a culture plate, and 75 microliters of test inoculum (∼1.7 x 10⁴ CFU) was pipetted onto the sample surface. A cover slip or film was placed over and in contact with the inoculum to ensure uniform and substantially complete coverage of the inoculum over the sample surface. The culture plate then was incubated for 24 hours at 37º with humidity.

Bacteria on the sample and cover slip/film were recovered, collected into D/E Neutralizing Broth, and counted. The antimicrobial activity of the test samples is expressed herein as a log reduction value in comparison with the bacterial growth of the corresponding untreated (control) sample.

A log reduction is expressed as log(U/B), where U is the average CFU of the test organism from the inoculum recovered in the Neutralizing Broth from the negative control (untreated) sample tile, and B is the average CFU of the test organism recovered in the Neutralizing Broth from the inoculated sample.

A variety of antimicrobial agents were tested in the glaze composition after glazing of a substrate sample. Of these compounds, a variety of combinations also were assessed, as detailed in the following discussion and examples

The antimicrobial agents in the adhesive composition used to generate the below experimental samples comprised 2% ZnO+4% Bi₂O₃. A low fire base glaze, F-524 (Fusion Ceramics, Inc., Carrollton, Ohio), was prepared, applied to the tile substrates, and dried thereon. An adhesive composition was applied to the dried baseline glaze by spraying, simulating a second adhesive layer, and the sample tiles were fired to Cone 5. The tiles then were evaluated according to the above-described modified JIS Z2801:2000 test protocol for the effect of the glazed tile on bacterial reduction.

Each sample class-negative control, experimental 1, and experimental 2-was run in quintuplicate, with the averaged results presented in TABLE 1.

**TABLE 1**

| Sample | No. Organisms Applied | No. Organisms Surviving (NOS) | NOS Standard | Avg. Log Reduction Vs Applied | Avg. Log Reduction Vs Standard |
|---|---|---|---|---|---|
| Control | 1.7 x 10⁴ | 0.9 x 10⁷ | 10⁷ | -- | -- |
| Treated | 1.7 x 10⁴ | 3950 | 995 | 1.5 | 4.3 |

The results demonstrate that the ceramic glaze disclosed herein was strongly efficacious against *Klebsiella pneumoniae* relative to the control.

In the exemplary ceramic glazing compositions discussed above, the tested antimicrobial agents included 2% ZnO+4% Bi₂O₃. As an alternative, the antimicrobial composition includes a first antimicrobial agent consisting of Ag₂CO₃ (e.g. CAS No. 534-16-7) and a second antimicrobial agent that is one of Bi₂O₃ (e.g. CAS No. 1304-76-3); CuO (e.g. CAS No. 1317-38-0); SnO₂ (e.g. CAS No. 18282-10-5); TiO₂ (anatase; e.g. CAS No. 13463-67-7); and ZnO (e.g. CAS No. 1314-13-2), wherein the first antimicrobial agent is present in the glaze composition at a concentration of from two to four percent, by weight of the glaze composition and the second antimicrobial agent is present in the glaze composition at a concentration of from two to four percent, by weight of the glaze composition.

In particular, the antimicrobial composition can be a synergistic antimicrobial composition including a first antimicrobial agent and a second antimicrobial agent, the antimicrobial composition being one of:
(a) 2% Ag2CO3 + 2% Bi2O3;
(b) 2% Ag2CO3 + 2% CuO;
(c) 2% Ag2CO3 + 4% SnO2;
(d) 2% Ag2CO3 + 2% ZnO;
(e) 2% Ag2CO3 + 4% ZnO;
(f) 2% CuO + 4% Ag2CO3;
(g) 2% SnO2 + 4% Ag2CO3;
(h) 2% TiO2 + 4% Ag2CO3;
or (i) 2% ZnO + 4% Ag2CO3.

As noted previously, the antimicrobial adhesive composition for ceramic glaze processes, its method of use, and ceramic glazed articles produced using the antimicrobial adhesive composition were designed to impart durable, persistent, and built-in antimicrobial protection to a variety of substrates. Accordingly, the scope of the disclosure contemplates ceramic articles that incorporate the present antimicrobial glazing. Such articles include, without limitation, toilets, bidets, washbasins, towel rails, soap holders, toilet roll holders, water control fixtures (e.g., hot and cold water handles), and ceramic tiles.

## Claims

1. A method for applying a dry ceramic glaze layer to a substrate, comprising:
applying a layer of a first adhesive composition to a surface of a body;
depositing a fritted glaze on the applied first layer of adhesive to form a frit layer thereon;
applying a layer of a second adhesive composition on the frit layer;
firing the substrate, frit layer and second adhesive layer to produce a glazed coating on the surface of the substrate;
wherein at least one of the first adhesive composition, the fritted glaze, or the second adhesive composition contains an antimicrobial composition; and
wherein the antimicrobial composition includes 2% ZnO and 4% Bi₂O₃, or the antimicrobial composition includes a first antimicrobial agent consisting of Ag₂CO₃ and a second antimicrobial agent that is one of Bi₂O₃, CuO, SnO₂, TiO₂ or ZnO; wherein the first antimicrobial agent is present in the glaze composition at a concentration of from two to four percent, by weight of the glaze composition; and
wherein the second antimicrobial agent is present in the glaze composition at a concentration of from two to four percent, by weight of glaze composition

2. The method of claim 1 wherein the second adhesive composition contains the antimicrobial agent.

3. The method of claim 1 wherein the fritted glaze contains the antimicrobial agent.

4. The method of claim 1 wherein the antimicrobial composition is a synergistic antimicrobial composition including a first antimicrobial agent and a second antimicrobial agent, the antimicrobial composition being one of:
(a) 2% Ag₂CO₃ + 2% Bi₂O₃;
(b) 2% Ag₂CO₃ + 2% CuO;
(c) 2% Ag₂CO₃ + 4% SnO₂;
(d) 2% Ag₂CO₃ + 2% ZnO;
(e) 2% Ag₂CO₃ + 4% ZnO;
(f) 2% CuO + 4% Ag₂CO₃;
(g) 2% SnO₂ + 4% Ag₂CO₃;
(h) 2% TiO₂ + 4% Ag₂CO₃;
(i) 2% ZnO + 4% Ag₂CO₃.

## Patentansprüche

1. Verfahren zum Aufbringen einer trockenen keramischen Glasurschicht auf ein Substrat, Folgendes umfassend:
Aufbringen einer Schicht einer ersten Klebstoffzusammensetzung auf eine Oberfläche eines Körpers;
Abscheiden einer gesinterten Glasur auf der aufgetragenen ersten Klebeschicht, um eine Sinterschicht darauf zu bilden;
Auftragen einer Schicht einer zweiten Klebstoffzusammensetzung auf die Sinterschicht;
Brennen des Substrats, der Sinterschicht und der zweiten Klebeschicht, um eine Glasurbeschichtung auf der Oberfläche des Substrats zu erzeugen;
wobei mindestens eine der ersten Klebstoffzusammensetzung, der gesinterten Glasur oder der zweiten Klebstoffzusammensetzung eine antimikrobielle Zusammensetzung enthält; und
wobei die antimikrobielle Zusammensetzung 2% ZnO und 4% Bi203 einschließt, oder die antimikrobielle Zusammensetzung ein erstes antimikrobielles Mittel, das aus Ag₂CO₃ besteht, und ein zweites antimikrobielles Mittel, das eines von Bi₂O₃, CuO, SnO₂, TiO₂ oder ZnO ist, einschließt; wobei das erste antimikrobielle Mittel in der Glasurzusammensetzung in einer Konzentration von zwei bis vier Gew.-% der Glasurzusammensetzung vorhanden ist; und
wobei das zweite antimikrobielle Mittel in der Glasurzusammensetzung in einer Konzentration von zwei bis vier Prozent, bezogen auf das Gewicht der Glasurzusammensetzung, vorhanden ist.

2. Verfahren nach Anspruch 1, wobei die zweite Klebstoffzusammensetzung das antimikrobielle Mittel enthält.

3. Verfahren nach Anspruch 1, wobei die gesinterte Glasur das antimikrobielle Mittel enthält.

4. Verfahren nach Anspruch 1, wobei die antimikrobielle Zusammensetzung eine synergistische antimikrobielle Zusammensetzung ist, die ein erstes antimikrobielles Mittel und ein zweites antimikrobielles Mittel einschließt, wobei die antimikrobielle Zusammensetzung eine von Folgendem ist:
(a) 2% Ag₂CO₃ +2% Bi₂O₃;
(b) 2% Ag₂CO₃ +2% CuO;
(c) 2% Ag₂CO₃ +4% Sn02;
(d) 2% Ag₂CO₃ +2% ZnO;
(e) 2% Ag₂CO₃ +4% ZnO;
(f) 2% CuO +4% Ag₂CO₃;
(g) 2% SnO₂ +4% Ag₂CO₃;
(h) 2% TiO₂ + 4% Ag₂CO₃;
(i) 2% ZnO +4% Ag₂CO₃.

## Revendications

1. Procédé d'application d'une couche de glaçure céramique sèche sur un substrat, comprenant les étapes consistant à :
appliquer une couche d'une première composition adhésive sur une surface d'un corps ;
déposer une glaçure frittée sur la première couche d'adhésif appliquée pour former une couche de fritte sur celle-ci ;
appliquer une couche d'une seconde composition adhésive sur la couche de fritte ;
cuire le substrat, la couche de fritte et la seconde couche adhésive pour produire un revêtement glacé sur la surface du substrat ;
dans lequel au moins une parmi la première composition adhésive, la glaçure frittée ou la seconde composition adhésive contient une composition antimicrobienne ; et
dans lequel la composition antimicrobienne comprend 2 % de ZnO et 4 % de Bi₂O₃, ou la composition antimicrobienne comprend un premier agent antimicrobien consistant en A_{g2}CO₃ et un second agent antimicrobien qui est un parmi Bi₂O₃, CuO, SnO₂, TiO₂ ou ZnO ; dans lequel le premier agent antimicrobien est présent dans la composition de glaçure à une concentration de deux à quatre pourcent en poids de la composition de glaçure ; et
dans lequel le second agent antimicrobien est présent dans la composition de glaçure à une concentration de deux à quatre pourcent en poids de la composition de glaçure.

2. Procédé selon la revendication 1, dans lequel la seconde composition adhésive contient l'agent antimicrobien.

3. Procédé selon la revendication 1, dans lequel la glaçure frittée contient l'agent antimicrobien.

4. Procédé selon la revendication 1, dans lequel la composition antimicrobienne est une composition antimicrobienne synergique comprenant un premier agent antimicrobien et un second agent antimicrobien, la composition antimicrobienne étant une parmi :
(a) 2 % de Ag₂CO₃ + 2 % de Bi₂O₃ ;
(b) 2 % de Ag₂CO₃ + 2 % de CuO ;
(c) 2 % de Ag₂CO₃ + 4 % de SnO₂ ;
(d) 2 % de Ag₂CO₃ + 2 % de ZnO ;
(e) 2 % de Ag₂CO₃ + 4 % de ZnO ;
(f) 2 % de CuO + 4 % de Ag₂CO₃ ;
(g) 2 % de SnO₂ + 4 % de Ag₂CO₃ ;
(h) 2 % de TiO₂ + 4 % de Ag₂CO₃ ;
(i) 2 % de ZnO + 4 % de Ag₂CO₃.
